# EUROPÄISCHE PATENTANMELDUNG

(11) **EP 2 214 101 A1**
(43) Veröffentlichungstag der Anmeldung: **04.08.2010**
(21) Anmeldenummer: 09001230.3
(22) Anmeldetag: 29.01.2009
(51) Int. Cl.: G06F 11/14, G06F 9/445

(54) **Verändern von Objekten einer Anwendung**

(71) Anmelder: Siemens Aktiengesellschaft, 80333 München (DE)
(72) Erfinder: Kob, Peter, 90562 Heroldsberg (DE); Muenzel, Georg, Plainsboro, NJ 08536 (US)

(57) **Zusammenfassung**

Die vorliegende Erfindung betrifft ein Verfahren zum Verändern von Objekten einer Anwendung. Ferner betrifft die vorliegende Erfindung ein Computerprogrammprodukt und eine Vorrichtung, welche eingerichtet sind, um das Verfahren durchzuführen, und ein System mit mindestens einer solchen Vorrichtung. Eine Mehrzahl von Objekten wird empfangen (S1) und es wird bestimmt (S2), welche dieser Objekte zu verändern sind. Die somit bestimmten Objekte werden kopiert (S3), wobei Veränderungen an den kopierten Objekten durchgeführt werden (S5). Anschließend werden die veränderten kopierten Objekte und die entsprechenden ursprünglichen Objekte zu neuen Objekten zusammengeführt (S6) und bereitgestellt (S7). Während des Veränderungsprozesses der kopierten Objekte werden die ursprünglichen Objekte als die Laufzeitobjekte an Programme und eine Logik bereitgestellt (S4), welche während der Laufzeit, also im Betrieb, ausgeführt werden.

## Beschreibung

Die vorliegende Erfindung betrifft ein Verfahren zum Verändern von Objekten einer Anwendung. Ferner betrifft die vorliegende Erfindung ein Computerprogrammprodukt und eine Vorrichtung, welche eingerichtet sind, um das Verfahren durchzuführen, und ein System mit mindestens einer solchen Vorrichtung.

In vielen System, beispielsweise Automatisierungsanlagen oder Steuerungssystemen, müssen Daten regelmäßig verändert beziehungsweise aktualisiert werden. Es ist jedoch schwierig Daten von Objekten einer Anwendung in einem laufenden System zu aktualisieren, beispielsweise einem System zum Überwachen und Steuern einer Automatisierungsanlage. Unter einem Objekt ist hier ein Exemplar eines bestimmten Datentyps oder einer bestimmten Klasse, also eine Instanz einer Klasse zu verstehen. Insbesondere ist es schwierig Daten in einem laufenden System zu aktualisieren, ohne die geregelte Datenverarbeitung nur kurz oder gar nicht zu unterbrechen. Problematisch ist dies beispielsweise in einer Umgebung, in der das System rund um die Uhr läuft beziehungsweise laufen muss.

Herkömmliche Lösungen sind meist unzureichend oder nicht zufrieden stellend, da eine Ausfallzeit, welche erforderlich ist, um Daten von Objekten zu aktualisieren, meist zu lang ist. Denn, herkömmliche Lösungen sehen zum Verändern von Objekten ein Herunterfahren, Aktualisieren und Neustarten des Systems vor, wozu so viel Zeit erforderlich ist, dass ein durchgehender Betrieb nicht gewährleistet ist. In redundanten Systemen wird häufig der redundante Partner heruntergefahren, was zu einem Verfügbarkeitsausfall führt. Aber auch wenn nur Teile eines Systems heruntergefahren werden, führt dies zu einem Funktionalitätsverlust. Ferner führt ein Herunterfahren des redundanten Partners oder eines Teils eines Systems dazu, dass, wenn der Teil mit der veränderten Information neu gestartet wird, eine inkonsistente Verarbeitung auftreten kann.

Eine gängige Vorgehensweise beim Aktualisieren (Update) von Konfigurationsdaten einer Anwendung besteht darin, einen großen Datensatz (z.B. eine Datenbank oder eine Tabelle) während einer Zeit geringer Aktivität (z.B. während der Nacht) zu sperren. Dies bedeutet jedoch weiterhin, dass entweder eine Funktion der Anwendung oder die komplette Anwendung für eine bestimmte Zeitdauer außer Betrieb ist.

Ferner werden bei größeren Datensätzen, um nicht zu viel Information auf einmal zu sperren, Objektaktualisierungen in geeigneten Fällen in kleinen Schritten durchgeführt, insbesondere während Zeiten geringer Aktivität im System. Falls bei solch einer inkrementellen Objektaktualisierung ein Problem auftritt, können kompensierende Transaktionen gestartet werden. Um jedoch eine kompensierende Transaktion durchführen zu können, muss sich das System merken, was verändert wurde, um im Falle eines Problems entscheiden zu können, was rückgängig gemacht werden muss.

Problematisch bei dieser Art von Lösungen ist jedoch, dass alle erfolgreich veränderten Informationen der Anwendung sofort sichtbar sind, und somit nicht mehr nachvollziehbar ist, welche der veränderten Informationen bereits gelesen wurden, beispielsweise von einer anderen Anwendung. Ein weiteres Problem der oben beschriebenen herkömmlichen Lösungen ist, dass vor jeder Aktualisierung bekannt sein muss, in welchem Zustand sich das System befindet, um zu bestimmen, ob eine Aktualisierung überhaupt vorgenommen werden kann.

Der Erfindung liegt demgegenüber die Aufgabe zu Grunde ein Verändern von Objekten einer Anwendung zu ermöglichen, wobei Ausfallzeiten von Teilen der Anwendung oder der gesamten Anwendung zu vermeiden sind.

Die der Erfindung zu Grunde liegende Aufgabe wird mit den Merkmalen der unabhängigen Patentansprüche gelöst. Bevorzugte Ausführungsformen der Erfindung sind in den abhängigen Patentansprüchen angegeben.

Durch die Erfindung wird ein Verfahren zum Verändern von Objekten einer Anwendung bereitgestellt, in welchem eine Mehrzahl von Objekten empfangen wird und bestimmt wird, welche dieser Objekte zu verändern sind. Die somit bestimmten Objekte werden kopiert, wobei Veränderungen an den kopierten Objekten durchgeführt werden. Anschließend werden die veränderten kopierten Objekte und die entsprechenden ursprünglichen Objekte zu neuen Objekten zusammengeführt und bereitgestellt.

Vorzugsweise werden die neuen Objekte erst bereitgestellt, nachdem alle Veränderungen erfolgreich durchgeführt wurden, was beispielsweise separat bestätigt werden kann (Commit). Allerdings ist während einer solchen Bestätigungsphase kein Abbruch des Aktualisierungsvorgangs mehr möglich. Erfindungsgemäß kann somit sichergestellt werden, dass neue Objekt erst sichtbar werden, wenn alle Veränderungen erfolgreich durchgeführt wurden. Dadurch wird verhindert, dass die neuen Objekte zu früh bereitgestellt werden, weshalb ihre Information auch nicht zu früh gelesen werden kann, was wie oben beschrieben in herkömmlichen Systemen passieren und zu Problemen führen kann.

Wie eingangs beschrieben wird unter einem Objekt ein Exemplar eines bestimmten Datentyps oder einer bestimmten Klasse verstanden, also eine Instanz einer Klasse. Ein Objekt kann aber auch ein Datensatz oder ein Speicherbereich (Speicherzelle) sein, der angesprochen wird und in welchem zu verändernde Daten stehen. Auf jeden Fall ist unter dem Begriff Objekt jenes Datengebilde zu verstehen, an welchem Veränderungen nötig sein können. Die Begriffe Verändern und Aktualisieren werden nachfolgend in äquivalenter Weise verwendet.

Objekte, an denen Veränderungen vorgenommen werden sollen, befinden sich üblicherweise in einem Änderungsmodus, der ein Hinweis darauf ist, dass das Objekt kopiert werden muss. Alle anderen Objekte, die sich nicht im Änderungsmodus befinden, werden ohne Erzeugen einer Kopie weitergeleitet. Sowohl die kopierten als auch die ursprünglichen Objekte werden nach einem erfolgreichen Abschluss aller Veränderungen wieder zusammengeführt. Dabei werden veränderte kopierte Objekte wieder mit ihrem Original zusammengeführt, welches hier als entsprechendes ursprüngliches Objekt bezeichnet wird.

Da die Veränderungen erfindungsgemäß an kopierten Objekten durchgeführt werden, müssen die zu verändernden Objekte nicht mehr temporär gesperrt werden. Daher können Veränderungen während einer Laufzeit der Anwendung durchgeführt werden und Ausfallzeiten der Anwendung oder Teilen der Anwendung verhindert werden. Insbesondere werden durch das Verändern der Kopien die Laufzeitdaten nicht beeinflusst. Denn, die zu verändernden Objekte werden von den Laufzeitobjekten getrennt, wodurch die Laufzeitobjekte die zu verändernden Objekte nicht überschreiben können und umgekehrt. Ferner muss im Gegensatz zu herkömmlichen Lösungen der Zustand der Anwendung oder eines Systems nicht bekannt sein, um die Änderungen durchführen zu können, da die Anwendung erfindungsgemäß nicht unterbrochen werden muss.

Während des Veränderungsprozesses der kopierten Objekte werden die ursprünglichen Objekte als die Laufzeitobjekte an Programme und eine Logik bereitgestellt, welche während der Laufzeit, also im Betrieb, ausgeführt werden. Das heißt, wenn beispielsweise eine andere Anwendung nach einem bestimmten Objekt fragt, dann bekommt sie so lange das ursprüngliche Objekt zu sehen, bis die Kopie dieses Objekts und möglicherweise weiterer Objekte erfolgreich geändert und mit dem entsprechenden ursprünglichen Objekt zusammengeführt wurde. Erst dann kann auf das neue Objekt zugegriffen werden.

Das Zusammenführen der veränderten kopierten Objekte und der entsprechenden ursprünglichen Objekte wird basierend auf bestimmten Regeln durchgeführt. Beispielsweise kann festgelegt sein, dass nur das jüngste Objekt weiter verwendet wird, oder es gibt für jede Eigenschaft eines Objekts eine vorbestimmte Regel.

Sollte eine Transaktion abgebrochen werden, bevor alle Objekte aktualisiert wurden, werden vorzugsweise alle bis dahin aktualisierten Objekte in den ursprünglichen Zustand zurückversetzt. So entstehen beim Zusammenführen keine neuen Objekte. Zusätzlich kann durch einen Transaktionsabbruch das Zusammenführen der bis dahin geänderten Objekte und der entsprechenden ursprünglichen Objekte gesperrt werden, so dass weiterhin nur die ursprünglichen Objekte bereitgestellt werden.

Gemäß einer Ausführungsform der vorliegenden Erfindung werden Konfigurationsdaten der kopierten Objekte verändert, um eine Konfigurationsänderung der Anwendung durchzuführen. Dabei hängt es von der Logik ab, welche Objekte kopiert werden. Beispielsweise ist es möglich, dass alle Objekte kopiert werden, auch die Laufzeitobjekte (copy on read and write). Dabei muss eine Kopie aller Objekte nicht zwangsläufig erst dann gestartet werden, wenn die Konfigurationsänderung (Update) startet. Vorzugsweise werden jedoch nur jene Objekte kopiert, welche für eine Konfigurationsänderung benötigt werden (copy on write), da die weiteren Objekte während des Veränderungsprozesses nicht ausgewertet werden. Somit können überflüssige Kopien von Objekten vermieden werden, die nicht verändert werden. Es wird auch davon ausgegangen, dass die Objekte, welche verändert werden, während der Konfigurationsänderung nicht durch den parallel laufenden normalen Prozess beeinflusst werden, in dem die ursprünglichen Objekte verwendet werden, welche die alten Werte besitzen.

Gemäß einer weiteren Ausführungsform der vorliegenden Erfindung werden zum Bestimmen, welche Objekte zu verändern sind, Veränderungsdaten empfangen. Diese Veränderungsdaten enthalten dann Information die festlegt, was zu verändern beziehungsweise zu aktualisieren ist. Falls die Objekte, auf welche sich die Veränderungsdaten beziehen, noch nicht kopiert wurden, können die Veränderungsdaten auch zwischengespeichert werden. Allerdings kann es auch Voraussetzung sein, dass die Veränderungsdaten empfangen werden bevor die zu verändernden Objekte kopiert werden, und zwar dann, wenn die Veränderungsdaten eine Information darüber enthalten, welche der empfangenen Objekte kopiert werden müssen. Die Veränderungsdaten können beispielsweise von geeigneten Konfigurationstools bereitgestellt werden.

Gemäß einer weiteren Ausführungsform der vorliegenden Erfindung werden, wenn während dem Verändern der kopierten Objekte Änderungen an den entsprechenden ursprünglichen Objekten vorgenommen werden, die veränderten kopierten Objekte und die entsprechenden ursprünglichen Objekte so zusammengeführt, dass die neuen Objekte in einer konsistenten Form bereitgestellt werden. Mit anderen Worten werden Informationen, die zur Laufzeit entstanden sind, und Informationen, die durch die Konfigurationsänderung entstanden sind, durch einen geeigneten Algorithmus so miteinander verbunden, dass beide Informationen (die Laufzeitinformation soweit nötig) in einer konsistenten Form zur Verfügung stehen. Dabei können die kopierten Objekte nach dem Zusammenführen der veränderten kopierten Objekte und der entsprechenden ursprünglichen Objekte verworfen werden.

Gemäß einer weiteren Ausführungsform der vorliegenden Erfindung wird während der Laufzeit der Anwendung überprüft, ob das Verändern der kopierten Objekte zulässig ist. Dies ist beispielsweise dann vorteilhaft, wenn bestimmte Werte nur nach einer internen Prüfung geändert werden dürfen und eine Konfiguration ansonsten unverändert bleiben muss. Sollte die vorzeitige Prüfung der Zulässigkeit von Veränderungen an den kopierten Objekten negativ ausfallen, so kann die Transaktion abgebrochen werden. Ferner kann anhand solch einer vorzeitigen Prüfung vorab festgestellt werden, ob irgendwelche vorbereitenden Aktionen durchgeführt werden müssen, z.B. Daten in ein Feldgerät laden. Dann kann das übergeordnete System über Änderungen informiert werden, welche zeitnah anstehen aber noch nicht durchgeführt wurden, um gegebenenfalls entsprechende Aktionen auszulösen. Damit die Logik entscheiden kann, ob eine Aktion ausgeführt werden kann, muss es aber möglich sein, Informationen geänderter Objekte zu lesen, bevor sie überhaupt bereitgestellt werden, das heißt während der Laufzeit. Dies wird durch die vorzeitige Überprüfung erreicht, indem mögliche Probleme in zukünftigen Prozessen während der Veränderung kopierter Objekte, also während der Laufzeit der Anwendung, festgestellt werden.

Gemäß einer weiteren Ausführungsform der vorliegenden Erfindung wird während der Laufzeit der Anwendung bestimmt, zu welchem Zeitpunkt die neuen Objekte bereitgestellt werden. In diesem Fall wird überprüft, ob Randbedingungen zum Bereitstellen der neuen Objekte erfüllt sind. Dies ist beispielsweise dann vorteilhaft, wenn das übergeordnete System starken Lastschwankungen unterliegt. Dann wird bestimmt, dass die neuen Objekte zu einem Zeitpunkt niedriger Systemlast bereitgestellt werden. Ansonsten könnte der Zustand des übergeordneten Systems möglicherweise instabil werden und das System im schlimmsten Fall kollabieren. Das heißt, gemäß dieser Ausführungsform werden die neuen Objekte vorzugsweise erst dann bereitgestellt, wenn vorgegebene Randbedingungen erfüllt sind.

Gemäß einer weiteren Ausführungsform der vorliegenden Erfindung werden die veränderten kopierten Objekte nach dem Zusammenführen mit den entsprechenden ursprünglichen Objekten gespeichert. Beispielsweise erfolgt dies in einem dafür vorgesehenen Zwischenspeicher. Somit ist es zu einem späteren Zeitpunkt möglich anhand der zwischengespeicherten Information durchgeführte Veränderungen rückgängig machen zu können (Undo).

Gleichermaßen können auch die ursprünglichen Objekte zwischengespeichert werden, um sie zu einem späteren Zeitpunkt für ein Audit oder für Zwecke der Optimierung bei einem Neustart des Systems zu nutzen. Um jedoch für eine systeminterne Entlastung zu sorgen, können die veränderten kopierten Objekte und die ursprünglichen Objekte auch verworfen werden, nachdem sie erfolgreich zusammengeführt wurden.

Gemäß einem weiteren Aspekt betrifft die vorliegende Erfindung ein Computerprogrammprodukt, insbesondere digitales Speichermedium, mit computerausführbaren Instruktionen zur Durchführung des oben beschriebenen Verfahrens.

Gemäß einem weiteren Aspekt betrifft die vorliegende Erfindung eine Vorrichtung zum Verändern von Objekten einer Anwendung. Die Vorrichtung umfasst einen Objektspeicher (object repository), einen Veränderungsdatenspeicher (configuration tool) und eine Veränderungseinheit (configuration updater). Der Objektspeicher empfängt eine Mehrzahl von Objekten, speichert sowohl die kopierten als auch die ursprünglichen Objekte und verwaltet die Veränderungseinheit beziehungsweise alle Konfigurationstransaktionen. Der Veränderungsdatenspeicher stellt die Veränderungsdaten bereit, um die zu verändernden Objekte zu bestimmen und um festzulegen, was an den jeweiligen Objekten zu verändern ist. Die Veränderungseinheit kann beispielsweise eine Konfigurationskomponente sein und eingerichtet sein, um das oben beschriebene Verfahren durchzuführen. Bei der Veränderungseinheit handelt es sich somit um die zentrale Komponente, welche die Logik umfasst. Sie empfängt die Veränderungsdaten von dem Veränderungsdatenspeicher und schreibt die kopierten Objekte in einen entsprechenden Speicher. Ferner führt die Veränderungseinheit die veränderten kopierten Objekte und die ursprünglichen Objekte, welche möglicherweise während der Laufzeit geändert wurden, zusammen. Außerdem bestätigt die Veränderungseinheit als zentrale Komponente auch, ob alle Veränderungen in den kopierten Objekten erfolgreich abgeschlossen wurden (Commit), und kann eine Transaktion abbrechen und in diesem Fall veranlassen, dass alle kopierten Objekte verworfen werden.

Die Vorrichtung zum Verändern von Objekten einer Anwendung kann mittels Softwaremodulen in einer normalen PC-Hardware umgesetzt werden. Allerdings kann sie auch in einer speziellen Hardware umgesetzt werden, in welcher die Kopien mittels eines speziellen Schreibmodus erzeugt werden. Gemäß einer speziellen Ausgestaltung können auch mehrere Veränderungseinheiten parallel arbeiten, wobei in diesem Fall mehrere Kopien der zu verändernden Objekte erzeugt werden.

Gemäß einem weiteren Aspekt betrifft die vorliegende Erfindung ein System zum Überwachen und Steuern einer Automatisierungsanlage, umfassend mindestens eine Vorrichtung zum Verändern von Objekten einer Anwendung wie oben beschrieben. Dieses System ist beispielsweise ein SCADA (Supervisory Control and Data Acquisition) -System zum Überwachen und Steuern technischer Prozesse in einer Automatisierungsanlage. In einem SCADA-System werden technische Prozesse jedoch nicht nur überwacht und gesteuert sondern auch visualisiert. Beispielsweise läuft in dem SCADA-System eine Anwendung, welche die Position (z.B. oben oder unten) einer Vorrichtung (z.B. Stanze) anzeigt. Während der Laufzeit der Anwendung wird die Statusanzeige für eine Position der Vorrichtung stets aktualisiert. Allerdings sind auch nur die Daten zu sehen, die während der Laufzeit geschrieben werden. Wird nun die Anwendung in dem SCADA-System gemäß dem obigen Verfahren verändert beziehungsweise aktualisiert, so muss die Anwendung dafür nicht unterbrochen werden. Das heißt, die Aktualisierung erfolgt während der Laufzeit der Anwendung. Die veränderten kopierten Objekte sind vor dem Zusammenführen im SCADA-System nicht sichtbar.

Nachfolgend werden bevorzugte Ausführungsbeispiele der Erfindung mit Bezugnahme auf die Zeichnung näher erläutert.

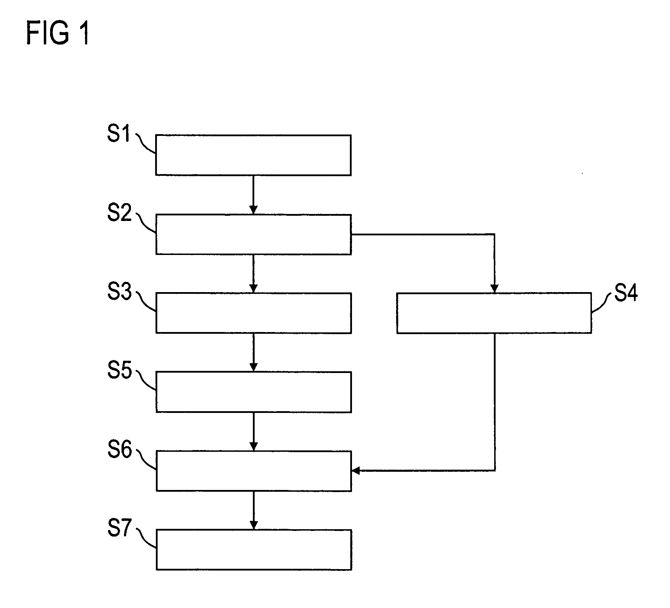

- FIG 1: zeigt ein Flussdiagramm eines Verfahrens zum Verändern von Objekten einer Anwendung gemäß einem Ausführungsbeispiel der vorliegenden Erfindung.

FIG 1 zeigt ein Flussdiagramm eines Verfahrens zum Verändern von Objekten einer Anwendung gemäß einem Ausführungsbeispiel der vorliegenden Erfindung. In einem ersten Schritt S1 wird eine Mehrzahl von Objekten empfangen. Aus dieser Mehrzahl von Objekten werden in einem zweiten Schritt S2 Objekte bestimmt, die zu verändern sind, wobei auch nur ein einzelnes Objekt bestimmt werden kann. Diese bestimmten Objekte werden in einem dritten Schritt S3 kopiert. Parallel dazu werden in einem vierten Schritt S4 die ursprünglichen Objekte als Laufzeitobjekte an Programme und eine Logik bereitgestellt, welche während der Laufzeit, also im Betrieb, ausgeführt werden. In einem fünften Schritt S5 werden die kopierten Objekte während der Laufzeit der Anwendung verändert, ohne dass sie die Laufzeitobjekte beeinflussen oder umgekehrt. In einem sechsten Schritt S6 werden die veränderten kopierten Objekte und die entsprechende ursprünglichen Objekte zu neuen Objekten zusammengeführt. Gemäß einem besonders bevorzugten Ausführungsbeispiel erfolgt das Zusammenführen im Schritt S6 erst dann, wenn alle Veränderungen der kopierten Objekte erfolgreich durchgeführt und bestätigt (Commit) wurden. Die zusammengeführten Objekte werden dann in einem letzten Schritt S7 bereitgestellt. Das heißt, ab diesem Zeitpunkt werden nicht mehr die ursprünglichen Objekte sondern die neuen Objekte gelesen und sind Teil der Anwendung, welche nun eine geänderte Konfiguration besitzt.

Der obige Ablauf basiert auf dem Prinzip eines Zwei-Phasen-Commit. In einer Vorbereitungsphase werden die Veränderungen an den kopierten Objekten durchgeführt. In der darauf folgenden Commit-Phase werden die Änderungen angewendet, im hier beschriebenen Fall durch das Zusammenführen der geänderten und der ursprünglichen Objekte zu neuen Objekten. Gemäß einer Ausgestaltung kann während der Vorbereitungs- und der Commit-Phase ein längeres Zeitfenster liegen, in dem auch andere Speicher aktualisiert werden (z.B. bei verteilten Langzeittransaktionen), oder in welcher die Konfigurationsänderung überprüft wird.

## Patentansprüche

1. Verfahren zum Verändern von Objekten einer Anwendung, umfassend die folgenden Schritte:
- Empfangen (S1) einer Mehrzahl von Objekten,
- Bestimmen (S2) von Objekten, die zu verändern sind,
- Kopieren (S3) der bestimmten Objekte,
- Verändern (S5) der kopierten Objekte,
- Zusammenführen (S6) der veränderten kopierten Objekte und der entsprechenden ursprünglichen Objekte zu neuen Objekten, und
- Bereitstellen (S7) der neuen Objekte,
wobei das Verfahren während einer Laufzeit der Anwendung durchgeführt wird.

2. Verfahren nach Anspruch 1, wobei Konfigurationsdaten der kopierten Objekte verändert werden, um eine Konfigurationsänderung der Anwendung durchzuführen.

3. Verfahren nach Anspruch 1 oder 2, wobei zum Bestimmen (S2), welche Objekte zu verändern sind, Veränderungsdaten empfangen werden.

4. Verfahren nach einem der vorhergehenden Ansprüche, wobei, wenn während dem Verändern (S5) der kopierten Objekte Änderungen an den entsprechenden ursprünglichen Objekten vorgenommen werden, die veränderten kopierten Objekte und die entsprechenden ursprünglichen Objekte so zusammengeführt (S6) werden, dass die neuen Objekte in einer konsistenten Form bereitgestellt (S7) werden.

5. Verfahren nach einem der vorhergehenden Ansprüche, wobei während der Laufzeit der Anwendung überprüft wird, ob das Verändern der kopierten Objekte zulässig ist.

6. Verfahren nach einem der vorhergehenden Ansprüche, wobei während der Laufzeit der Anwendung bestimmt wird, wann die neuen Objekte bereitgestellt (S7) werden.

7. Verfahren nach einem der vorhergehenden Ansprüche, wobei die veränderten kopierten Objekte nach dem Zusammenführen (S6) mit den entsprechenden ursprünglichen Objekten gespeichert werden.

8. Computerprogrammprodukt, insbesondere digitales Speichermedium, mit computerausführbaren Instruktionen zur Durchführung des Verfahrens nach einem der vorhergehenden Ansprüche.

9. Vorrichtung zum Verändern von Objekten einer Anwendung, umfassend:
- einen Objektspeicher,
- einen Veränderungsdatenspeicher, und
- eine Veränderungseinheit die eingerichtet ist, um das Verfahren nach einem der Ansprüche 1 bis 7 durchzuführen,
wobei der Objektspeicher eine Mehrzahl von Objekten empfängt und der Veränderungsdatenspeicher Veränderungsdaten bereitstellt, um zu verändernde Objekte zu bestimmen.

10. System zum Überwachen und Steuern einer Automatisierungsanlage, umfassend mindestens eine Vorrichtung nach Anspruch 9.
